# FASCICULE DE BREVET EUROPEEN

(11) **EP 2 559 601 B1**
(45) Date de publication et mention de la délivrance du brevet: **09.09.2015**
(21) Numéro de dépôt: 12178485.4
(22) Date de dépôt: 30.07.2012
(51) Int. Cl.: B60T 8/40, B60T 13/74

(54) **Système de freins dynamique électro-hydraulique et procédé de commande**
Elektrohydraulisches dynamisches Bremssystem, und entsprechendes Steuerverfahren
Electrohydraulic dynamic braking system and control method

(30) Priorité: 19.08.2011 FR 1102551
(43) Date de publication de la demande: 20.02.2013
(73) Titulaire: ROBERT BOSCH GMBH, 70442 Stuttgart (DE)
(72) Inventeur: Garnier, Remy, 71686 Remseck (DE); Richard, Philippe, 77500 Chelles (FR); Cagnac, Bastien, 60660 Cramoisy (FR)

(56) Documents cités:
- WO-A1-2004/110840
- WO-A1-2009/121645
- WO-A2-2009/083217
- DE-A1-102004 027 256
- DE-A1-102007 030 441

## Description

### Domaine de l'invention

La présente invention se rapporte à un système de freins dynamique électro-hydraulique comprenant un servofrein à moteur électrique actionnant un maître-cylindre relié aux freins de roue à travers un module de correction de trajectoire. Tels systèmes sont bien connus dans l'état de la technique. Un exemple est montré dans le document WO 2004/110840 A1.

L'invention se rapporte également à un procédé de commande d'un système de freins dynamique électro-hydraulique.

### Etat de la technique

De tels systèmes de freins dynamiques électro-hydrauliques sont connus. Néanmoins ils sont d'une structure relativement complexe.

### But de l'invention

La présente invention a pour but de simplifier le système de freins électro-hydraulique à fonction dynamique permettant d'utiliser au mieux la récupération d'énergie tout en utilisant des moyens de réalisation simples, peu encombrants et susceptibles de s'intégrer dans le module de correction de trajectoire dit module ESP.

### Exposé et avantages de l'invention

A cet effet, l'invention concerne un système de freins électro-hydraulique à fonctionnement dynamique du type défini ci-dessus dans lequel
- l'accumulateur de haute pression relié à la chambre primaire du maître-cylindre et à l'entrée du module ESP par l'intermédiaire d'une électrovanne,
- un circuit de commande recevant les signaux de demande de freinage du servofrein et du module ESP pour commander l'électrovanne de l'accumulateur haute pression selon le mode de freinage choisi ou imposé,
- le circuit commandant :
   * une phase préparatoire au freinage en assurant le remplissage de l'accumulateur haute pression à partir de la chambre primaire en actionnant le servofrein en l'absence d'action sur le frein ou de commande de freinage mécanique par le module ESP et en bloquant la charge de liquide de frein accumulée dans l'accumulateur haute pression,
   * une phase de freinage dynamique décomposée en deux étapes,
      ** une première étape de freinage dynamique proprement dit avec récupération d'énergie en isolant le maître-cylindre des freins de roue et en permettant au servofrein de répondre à l'action sur la pédale de frein par une décélération dynamique jusqu'à la décélération d'une vitesse de seuil
      ** une deuxième étape de freinage mécanique à partir de la vitesse de seuil jusqu'à l'arrêt en reliant la chambre primaire uniquement à l'accumulateur haute pression et au module ESP pour fournir à celui-ci le liquide de frein sous pression de l'accumulateur et alimenter les freins de roue pour un freinage mécanique.

Ce système de freins permet de passer avantageusement en mode de freinage dynamique, c'est-à-dire avec récupération d'énergie tout en pouvant s'effacer devant un mode de fonctionnement prioritaire imposé par les paramètres extérieurs appliqués au système de commande ou les paramètres imposés par le module ESP. La simplicité de cette réalisation permet d'augmenter le champ d'application du freinage dynamique, même pour de brèves actions de freinage. De plus, le passage en freinage dynamique et la commutation entre la première étape de freinage dynamique avec récupération d'énergie et la seconde étape avec freinage assuré par le liquide sous pression de l'accumulateur haute pression est parfaitement transparent pour le conducteur qui ne perçoit ni le mode de freinage dynamique avec récupération ni la fin du freinage par le liquide sous pression fourni par l'accumulateur haute pression.

La recharge de l'accumulateur haute pression est également transparente et imperceptible pour le conducteur puisque cette recharge se fait lorsque la pédale de frein n'est pas actionnée. Cette recharge est commandée par le servofrein maintenant la position de la pédale de frein.

Suivant une caractéristique avantageuse, le système comporte une liaison entre la chambre primaire et le réservoir de liquide de frein équipée d'une électrovanne commandée par le module ESP.

Suivant une caractéristique avantageuse, pour la première étape de freinage dynamique, le circuit de commande actionne l'électrovanne reliant la chambre primaire au réservoir pour l'ouvrir et laisser dans sa position fermée, l'électrovanne reliant l'accumulateur haute pression à la conduite de sortie de la chambre primaire.

Suivant une caractéristique avantageuse, dans la deuxième étape de freinage mécanique de la phase de freinage dynamique, le circuit commande la fermeture de l'électrovanne et ouvre l'électrovanne reliant l'accumulateur haute pression à la conduite de sortie de la chambre primaire.

Cette mise en communication de la chambre primaire avec le réservoir pendant la première étape de la phase de freinage dynamique permet de simuler l'impression du freinage hydraulique pour le conducteur alors que le mode de freinage réellement appliqué est celui du freinage dynamique.

Suivant une variante de réalisation, le système comporte un accumulateur de pression relié à la chambre primaire par une électrovanne commandée par le module de correction de trajectoire ESP pour mettre en communication cet accumulateur de pression avec la chambre primaire pendant la première étape de freinage dynamique.

Cette forme de réalisation peut simplifier dans certaines circonstances la réalisation du système de freins et de regrouper l'accumulateur haute pression, l'accumulateur de pression et les électrovannes qui les commandent dans un ensemble facile à intégrer dans le module ESP.

En effet et de manière générale, suivant une caractéristique intéressante en partie déjà évoquée ci-dessus, l'accumulateur haute pression et son électrovanne ainsi que l'électrovanne du réservoir ou l'accumulateur haute pression, son électrovanne et l'accumulateur de pression et son électrovanne sont intégrés dans le module ESP.

Suivant une autre caractéristique avantageuse, l'accumulateur haute pression et l'accumulateur de pression sont des cylindres équipés d'un piston chargé par un ressort.

Suivant une autre caractéristique avantageuse, l'électrovanne du réservoir, l'électrovanne de l'accumulateur haute pression et l'électrovanne de l'accumulateur de pression sont des électrovannes à tiroir à rappel mécanique par ressort en position fermée, en l'absence de courant.

L'invention a également pour objet un procédé de commande d'un système de freins dynamique électro-hydraulique caractérisé par les phases de commande suivantes :
* dans une phase préparatoire au freinage, on remplit l'accumulateur haute pression à partir d'une chambre primaire d'un maître-cylindre en actionnant le servofrein en l'absence d'action sur le frein ou de commande de freinage mécanique par le module ESP et on bloque la charge de liquide de frein accumulée dans l'accumulateur haute pression,
* dans une phase de freinage dynamique, on effectue deux étapes :
   ** on effectue un freinage dynamique proprement dit avec récupération d'énergie en isolant le maître-cylindre des freins de roue et par le servofrein, on répond à l'action sur la pédale de frein jusqu'à la décélération d'une vitesse de seuil,
   ** à partir de la vitesse de seuil jusqu'à l'arrêt, on relie la chambre primaire du maître-cylindre uniquement à l'accumulateur haute pression et au module ESP pour fournir à celui-ci le liquide de frein sous pression de l'accumulateur et on alimente les freins de roue pour un freinage mécanique.

### Dessins

La présente invention sera décrite ci-après de manière plus détaillée à l'aide de modes de réalisation d'un système de freins dynamique représenté très schématiquement dans les dessins annexés dans lesquels :
- la figure 1 est un schéma d'ensemble du système de freins selon l'invention,
- la figure 2 montre le système de freins selon l'invention en phase de remplissage de l'accumulateur haute pression,
- la figure 3 montre le système de freins prêt à fonctionner,
- la figure 4 est une vue schématique du système de freins fonctionnant par freinage mécanique,
- la figure 5 est une vue schématique du système de freins en mode de freinage dynamique avec récupération d'énergie,
- la figure 6 est une vue analogue à celle de la figure 5 correspondant à la fin de la phase de freinage dynamique,
- la figure 7 est un schéma de l'installation en mode de fonctionnement de secours, et
- la figure 8 montre une variante de réalisation du système de freins dynamique selon l'invention.

### Description de modes de réalisation de l'invention

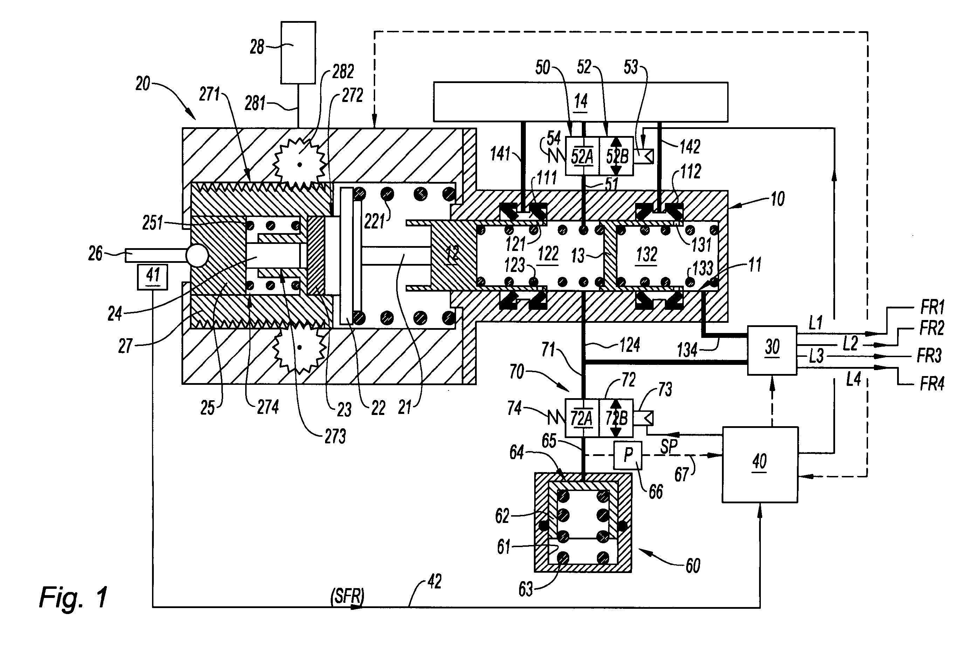

Selon la figure 1, l'invention concerne un système de freins composé d'un maître-cylindre tandem 10 relié à un servofrein 20 à moteur électrique 28 pour actionner des freins de roue FR1-4 par l'intermédiaire d'un module 30 de contrôle de freinage ESP relié à un circuit de commande 40 recevant différentes informations sur les paramètres de fonctionnement du véhicule ainsi qu'un signal d'actionnement de freins SFR pour déclencher une opération de freinage dynamique ; la partie électrique de récupération d'énergie cinétique du véhicule au niveau de la génératrice n'est pas représentée dans les dessins.

Le maître-cylindre 10 a un alésage 11 recevant un piston primaire 12 et un piston secondaire 13 ; le piston secondaire 13 est appuyé contre le fond de l'alésage 11 par un ressort 133 ; le piston primaire 12 est séparé du piston secondaire 13 par un ressort 123. Les pistons 12, 13 sont des pistons creux formés d'un cylindre et d'un fond pour délimiter chacun une chambre 122, 132 et recevoir les ressorts 123, 133. Le piston primaire 12 et le piston secondaire 13 ont des orifices d'alimentation 121, 131 communiquant chacun avec une gorge d'alimentation périphérique 111, 112 du boîtier du maître-cylindre 10 ; ces gorges 111, 112 sont reliées à un réservoir de liquide de frein 14. Chaque gorge 111, 112 comporte des joints d'étanchéité à lèvres, non référencés et disposés en fonction de la différence de pression à laquelle ils sont exposés, selon les connaissances de l'homme du métier. Dans la position appropriée, au repos du maître-cylindre 10, les orifices d'alimentation 121, 131 des deux pistons 12, 13 sont en communication avec les gorges d'alimentation 111, 112 et avec le réservoir de liquide de frein 14 de sorte que les chambres primaire 122 et secondaire 132 se remplissent de liquide de frein à la pression du réservoir 14 (pression atmosphérique). La liaison entre le réservoir 14 et l'alésage 11 est représentée par deux conduites 141, 142 associées chacune à l'une des chambres 122, 132 par l'intermédiaire des gorges 111, 112.

Lors d'une manoeuvre de freinage, le piston primaire 12 est poussé et se déplace, ce qui ferme l'orifice 121 dans l'alésage 11 et ainsi la communication de sa chambre 122 avec le réservoir 14 (141). La chambre primaire 122 remplie de liquide fonctionne alors comme un piston poussant le piston secondaire 13 qui comprime à son tour le liquide de frein dans sa chambre 132. Le liquide de frein sous une pression identique dans les deux chambres 122, 132 alimente le module ESP 30 par les deux conduites de sortie 124, 134, indépendantes. Le module ESP actionne les freins de roues selon le programme de freinage qu'il doit appliquer en fonction des paramètres et des signaux de détection qu'il aura reçus selon les conditions de fonctionnement connues du module ESP. Cette liaison peut être soumise à une commande externe du circuit de commande 40.

Les liaisons L1-L4 avec les freins de roues FR1-4 commandées par le module ESP 30 assurent l'alimentation commandée des freins de roues FR1-4.

Le piston primaire 12 est assisté par l'action du servofrein électrique 20 par l'intermédiaire d'une tige de poussée 21, elle-même actionnée par un piston d'assistance 22 par l'intermédiaire d'un disque de réaction 23 et le cas échéant d'un piston intermédiaire 24. Le piston intermédiaire 24 est lui-même soumis à l'action d'un piston plongeur 25 relié à la tige de commande 26 de la pédale de frein. Le disque de réaction 23 est porté par le piston d'actionneur 27 commandé par le moteur électrique 28 du servofrein 20 transmettant son mouvement par une transmission 281 reliée à un ou deux pignons 282 engrénant avec une crémaillère respective 271 du piston d'actionneur 27.

Le piston d'actionneur 27 comporte un cylindre de réception 272 du disque de réaction 23 et de guidage du piston d'assistance 22 sur son côté tourné vers le maître-cylindre tandem 10.

De l'autre côté, le piston d'actionneur 27 comporte un cylindre de guidage 273 pour le piston intermédiaire 24 et un cylindre de guidage 274 pour le piston plongeur 25.

Le piston d'assistance 22 est équipé d'un ressort de rappel 221 et le piston plongeur 25 d'un ressort de rappel 251 ; ce dernier est appuyé contre le fond du piston d'actionneur 27 alors que le ressort de rappel 221 du piston d'assistance est appuyé contre le fond du boîtier du servofrein 20.

Une action sur la pédale de frein déplace une tige de commande 26 ce qui est détecté par un capteur 41 relié par une ligne de transmission de signal 42 au circuit de commande 40 qui actionne le moteur 28 du servofrein électrique. Celui-ci entraîne le piston d'actionneur 27 qui pousse le piston d'assistance 22, la tige de poussée 21 et le piston primaire 12 pour mettre en pression le liquide de frein dans les chambres 122, 132.

Le système de freins comporte également une électrovanne 50 commandée par le circuit de commande 40 et interposée entre le réservoir de liquide hydraulique 14 et la chambre primaire 122 du maître-cylindre 10 par une conduite 51 reliant directement la chambre 122 et le réservoir 14 au-delà de la gorge d'alimentation 111 de la chambre primaire 122. Le débouché de la conduite 51 est situé dans une position non couverte par le piston primaire 12 dans l'alésage 11 du maître-cylindre 10 lorsque le maître-cylindre est au repos. L'électrovanne 50 est une électrovanne à tiroir 52 à deux positions 52A, 52B ; la position 52A est la position fermée et l'autre position 52B est la position ouverte. Le tiroir 52 est commandé par un actionneur 53 vers sa position active ; il est rappelé par un ressort 54. La position active 52B qui est la plus courte en durée est celle de l'activation de l'actionneur 53 (électroaimant) relié au circuit de commande 40.

La conduite de la chambre primaire 122 et celle de la chambre secondaire 132 sont reliées séparément au module ESP 30 par une conduite 124, 134 distincte.

La conduite de sortie 124 de la chambre primaire 122 est aussi reliée à un accumulateur haute pression 60 par l'intermédiaire d'une électrovanne 70 commandée par le circuit de commande 40. L'accumulateur haute pression 60 est un cylindre 61 formant avec un piston 62 poussé par un ressort 63, une chambre haute pression 64 reliée à la sortie de l'électrovanne 70 par une conduite 65. La chambre 64 de l'accumulateur haute pression 60 est reliée à un capteur de pression 66 branché sur la conduite 65 et fournissant ainsi le signal de pression SP par la ligne 67 au circuit de commande 40.

L'électrovanne 70 est une électrovanne à tiroir 72 à deux positions 72A, 72B ; la position 72A est la position fermée et l'autre position 72b est la position ouverte. Dans la position fermée, l'électrovanne 70 coupe la liaison entre la conduite 124 et l'accumulateur haute pression 60 alors que dans la position ouverte 72B, l'électrovanne met en communication l'accumulateur haute pression 60 avec la conduite 124. Le tiroir 72 est commandé par l'actionneur 73 constitué par un électroaimant relié au circuit de commande 40 pour être mis en position active. Le rappel en position neutre ou position fermée 72A est assuré par le ressort de rappel 74. L'électrovanne 70 est reliée à la conduite 124 par la conduite 71.

Selon ce montage, seule la chambre primaire 122 est reliée à l'accumulateur haute pression 60 et celui-ci est ainsi relié au module ESP 30 indépendamment de la conduite 134 de la chambre secondaire 132.

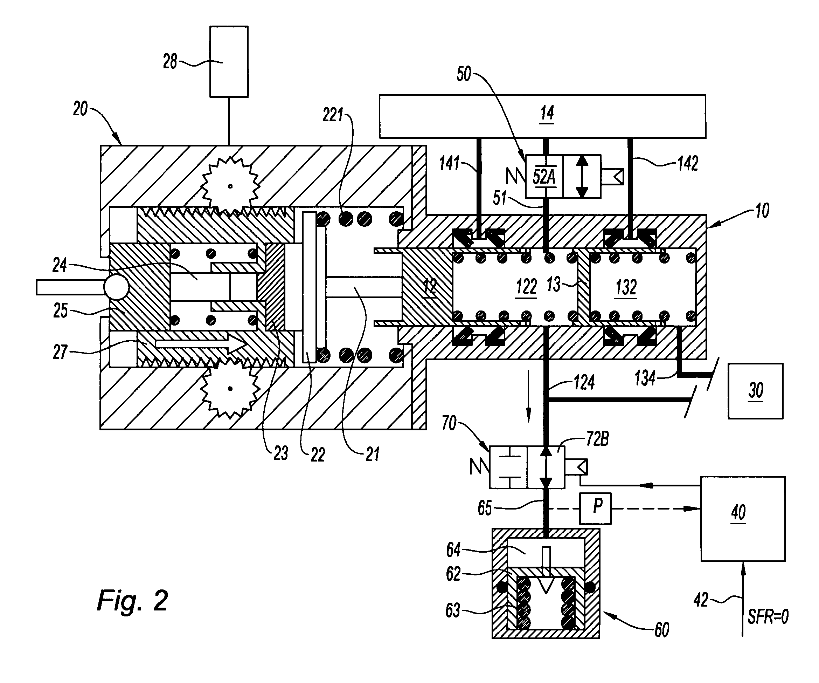

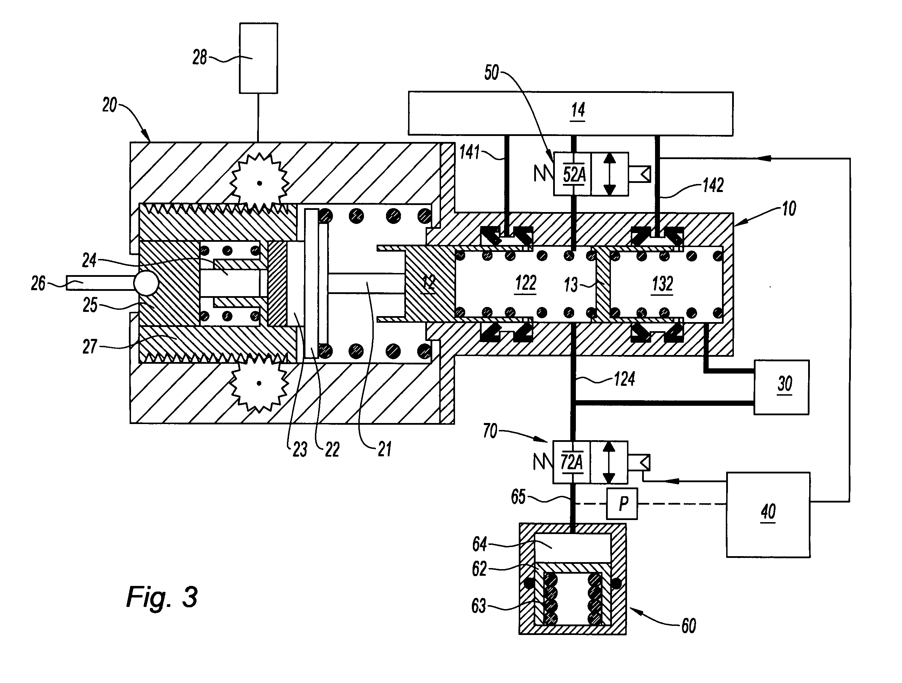

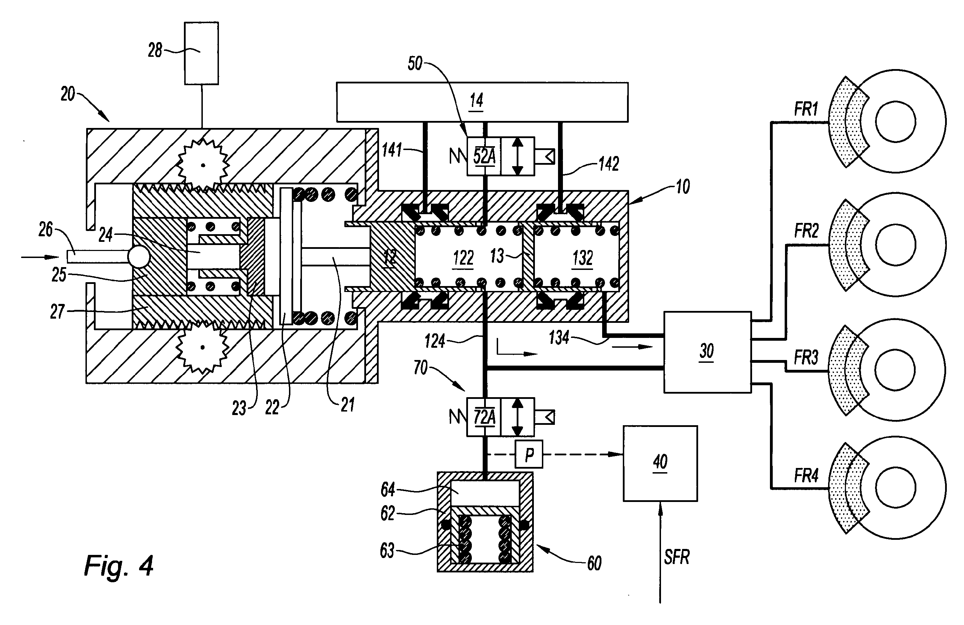

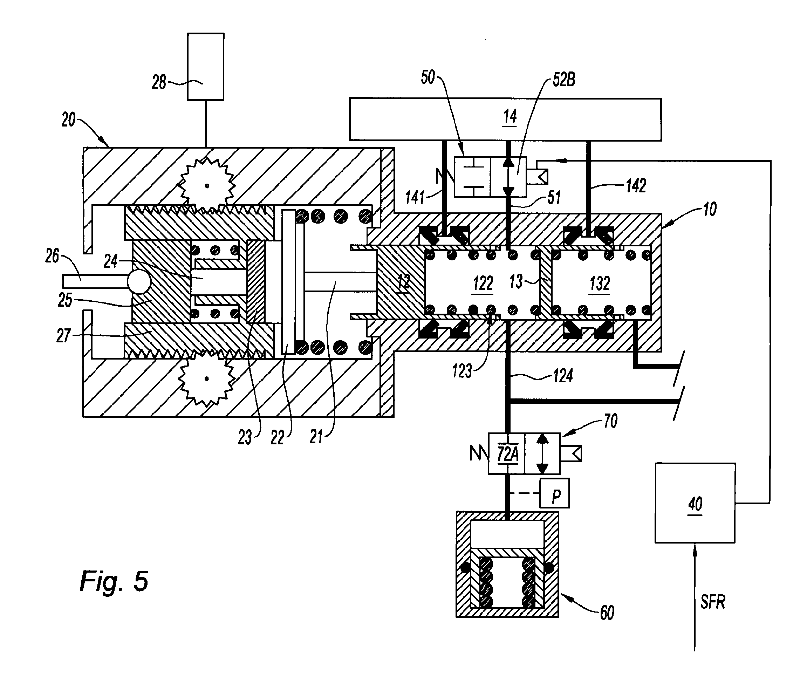

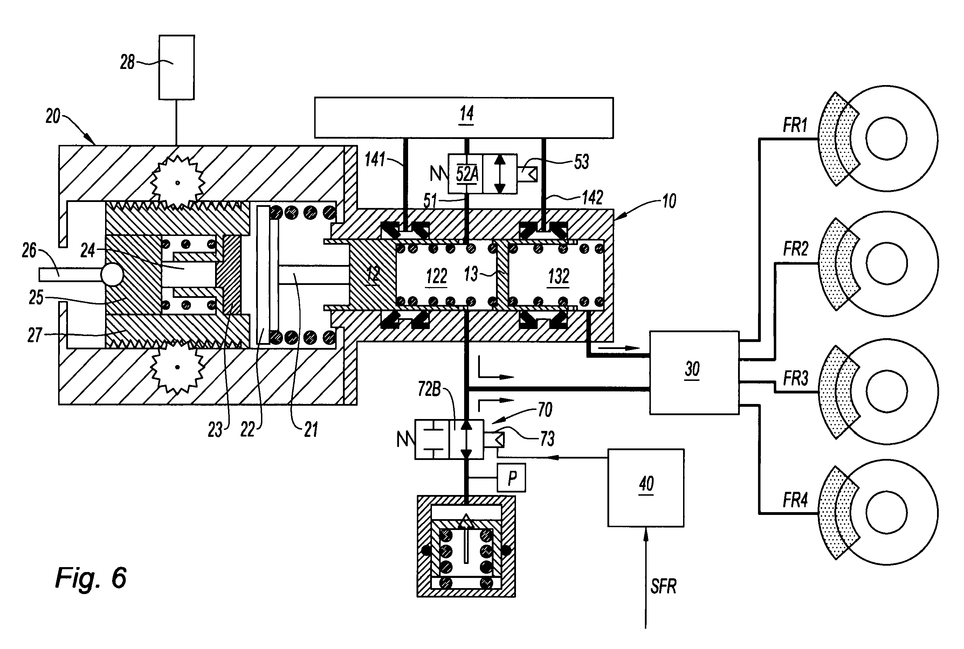

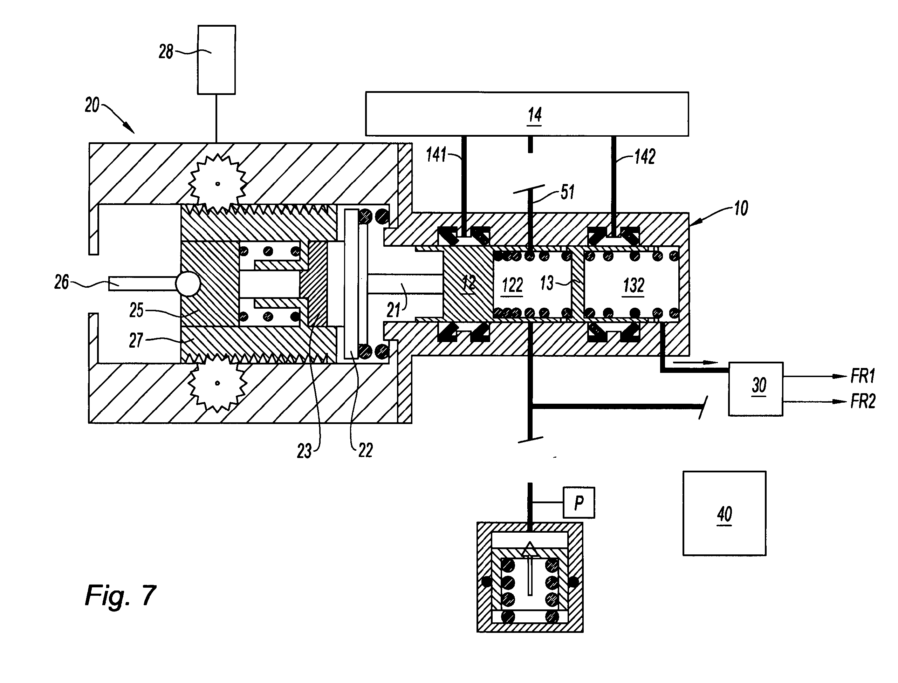

Les différentes étapes de freinage sont représentées dans les figures 2 et suivantes, à savoir une phase préparatoire de remplissage de l'accumulateur haute pression (figures 2 et 3), une phase de freinage mécanique sans récupération d'énergie (figure 4) et une phase de freinage dynamique c'est-à-dire avec récupération d'énergie (figures 5 et 6) et une situation de freinage de secours en cas de fuite du circuit primaire (figure 7).

### Phase préparatoire : figures 2 et 3

Au cours de la phase préparatoire (Figure 2), en l'absence d'action de freinage (SFR=0), le circuit de commande 40 détecte l'absence de demande de freinage par la pédale de frein ou par le module ESP. Les freins de roue FR1-4 sont isolés par le module ESP 30 et ne sont pas alimentés en liquide hydraulique sous pression. Le circuit de commande 40 actionne le servofrein électrique 20 pour comprimer le liquide de frein dans le maître-cylindre 10. L'électrovanne 70 entre la chambre principale 122 et l'accumulateur de haute pression 60 est ouverte ; l'électrovanne 50 entre la chambre 122 et le réservoir 14 est fermée. Le liquide de frein est refoulé dans l'accumulateur de haute pression 60 qui se met en charge.

A la fin de cette phase de remplissage et de mise en charge (Figure 3), l'électrovanne 70 de l'accumulateur haute pression 60 est fermée (position 72A) ; l'électrovanne 50 entre la chambre 122 et le réservoir 14 étant ouverte, le piston primaire 12 est reculé dans sa position de repos si bien que la chambre primaire 122 se remplit de liquide hydraulique. Le maître-cylindre 10 est prêt à fonctionner dans les conditions normales et on ferme l'électrovanne 50 du réservoir 14 (position 52A).

### Freinage mécanique : figure 4

Partant de la situation de la figure 4, une demande de freinage (SFR) peut être traitée de manière mécanique dans les conditions usuelles de fonctionnement du servofrein électromécanique 20, qui, à la demande d'une action sur la pédale de frein, pousse le piston primaire 12 et le piston secondaire 13 de façon à envoyer du liquide sous pression au module ESP 30 qui répartit le liquide entre les freins de roue FR1-4 pour répondre à la demande de freinage.

Ce freinage mécanique suppose que le circuit de commande 40 a choisi ce mode de fonctionnement de préférence au freinage dynamique pour des raisons dépendant d'un programme et de critères de choix qui n'ont pas à être développés ici.

Pour ce mode de freinage, l'électrovanne 50 reliant le réservoir 14 à la chambre 122 est fermée (position 52A) et l'alimentation des chambres 122, 132 ou le complément d'alimentation se fait en fonction de la position des orifices d'alimentation 121, 132 du piston principal 12 et du piston secondaire 13. Dans ce mode de fonctionnement, l'électrovanne 70 est également en position fermée 72A coupant la liaison entre l'accumulateur haute pression 60 et la conduite 124. Les chambres 122, 132 sont reliées chacune séparément par leur conduite respective 124, 134 au module ESP 30.

### Freinage dynamique : figures 5 et 6

Le freinage dynamique est choisi par le circuit de commande 40 selon des critères de choix qui ne sont pas détaillés ici, de préférence au freinage mécanique par le servofrein 20.

Le freinage dynamique se décompose en deux phases, la première au seuil VS représentée à la figure 5 avec récupération d'énergie cinétique du véhicule et celle en dessous de la vitesse de seuil VS correspondant à la fin du freinage jusqu'à l'arrêt, cette dernière phase étant représentée à la figure 6.

Si le circuit de commande 40 décide d'assurer un freinage dynamique avec récupération d'énergie, pour répondre à une demande d'action de freinage (SFR), le module ESP 30 coupe l'alimentation des freins de roue FR1-4. L'accumulateur haute pression 60 est isolé de la conduite 124 par l'électrovanne 70 fermée (position 72A) et la chambre 122 du maître-cylindre 10 est mise en communication avec le réservoir 14 par l'intermédiaire de l'électrovanne 50 en position activée 52B libérant la communication entre la conduite 51 et le réservoir 14 de sorte que le liquide de la chambre 122 peut retourner au réservoir 14 et le piston primaire 12 est libre d'avancer contre la force antagoniste du ressort 123 ; le piston auxiliaire 13 reste immobile puisque le volume de sa chambre 132 est fermé et ne communique pas avec le réservoir 14. Le servofrein 20 peut répondre à la demande de freinage exercée sur la pédale de frein en avançant le piston d'actionneur 27 qui déplace le piston primaire 12 refoulant ainsi du liquide de la chambre 122 du maître-cylindre 10 vers le réservoir 14. Le freinage dynamique avec récupération d'énergie est possible jusqu'à une vitesse basse (vitesse de seuil VS), à laquelle ce mode de freinage ne peut plus assurer la décélération demandée par le conducteur.

Cette phase de freinage en dessous de la vitesse de seuil et jusqu'à l'arrêt du véhicule ou pratiquement à l'arrêt est assurée par le passage au freinage mécanique représenté à la figure 6.

Le servofrein 20 conserve sa position commandée comme à la figure 5 de sorte que l'utilisateur ne perçoit aucune modification, mais le circuit de commande 40 déclenche la fermeture de l'électrovanne 50 en coupant l'alimentation de l'actionneur 53 pour que le tiroir 52 soit rappelé immédiatement par le ressort 54 dans sa position fermée 52A coupant la liaison entre la conduite 51 sortant de la chambre 122 et le réservoir 14, puis le circuit de commande 40 déclenche l'ouverture de l'électrovanne 70 de l'accumulateur haute pression 60 qui est ainsi mis en communication avec le module ESP 30. Le liquide hydraulique de l'accumulateur haute pression 60 est envoyé dans le module ESP 30 qui le répartit sur les freins de roue FR1-4 et assure le freinage mécanique.

### Freinage de secours : figure 7

La situation de secours correspond au cas d'une fuite de la chambre primaire 122. Dans ce cas, le freinage mécanique est assuré par le servofrein 20 qui pousse le piston primaire 12 et ce dernier pousse mécaniquement le piston secondaire 13. Le liquide hydraulique de la chambre secondaire 132 est ainsi mis en pression et alimente le module ESP 30 qui commande le circuit de freins en mode de défaillance, en général deux freins de roue sur les quatre FR1-4 du véhicule.

En fonctionnement normal, après la seconde étape de freinage dynamique, le circuit de commande 40 remet les différents éléments du système de freinage dans leur position de repos puis commande le remplissage de l'accumulateur haute pression pour que celui-ci soit prêt pour un nouveau freinage dynamique.

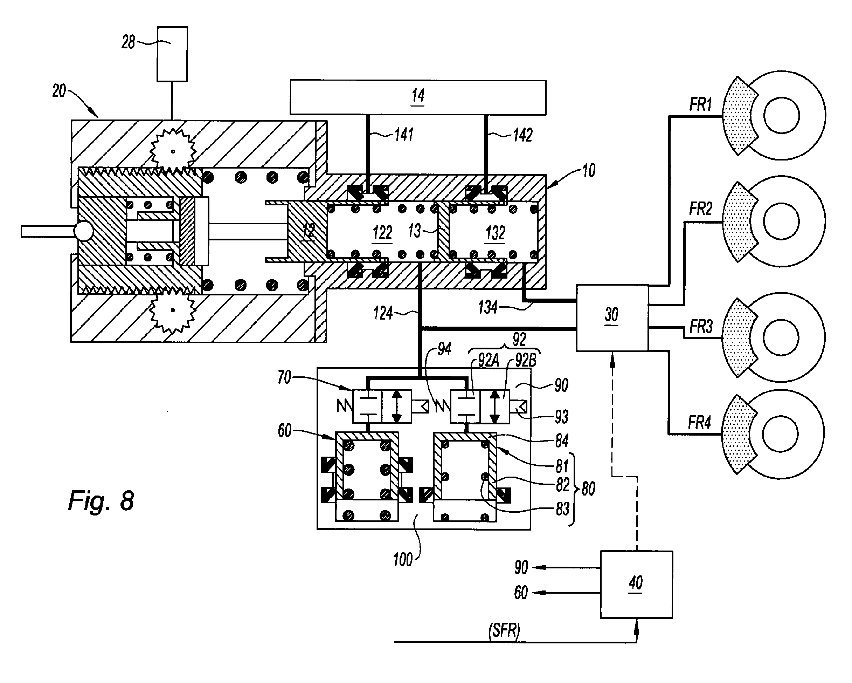

La figure 8 montre une variante de réalisation du système de freins dynamique électro-hydraulique correspondant pour l'essentiel au premier mode de réalisation. Pour les parties identiques au premier mode de réalisation, on utilisera les mêmes références et la description déjà faite ne sera pas répétée. La variante diffère du premier mode de réalisation par la suppression de l'électrovanne 50 reliant la chambre primaire 122 au réservoir 14 pour permettre le fonctionnement du servofrein électro-hydraulique 20 en mode de freinage dynamique, lorsque le maître-cylindre 10 est coupé des freins par le module 30.

Selon la variante, la chambre principale 122 du maître-cylindre 10 est reliée à un accumulateur de basse pression 80 composé d'un cylindre 81 logeant un piston 82 soumis à l'action d'un ressort de poussée 83 et délimitant une chambre 84. Cette chambre 84 est reliée par une électrovanne 90 à la conduite 124 débouchant dans la chambre primaire 122. L'électrovanne 90 est constituée par un tiroir 92 commandé par un électro-aimant 93 pour la position active ou rappelée en position de repos par un ressort 94. Ce tiroir a deux positions, l'une (92A) coupe l'accumulateur 80 de la conduite 124 et l'autre, (92B) met en communication l'accumulateur 80 avec la conduite 124 et ainsi avec la chambre primaire 122.

Cette électrovanne 90 est commandée par le circuit de commande 40 pour assurer une fonction relativement équivalente à celle de l'électrovanne 50.

En effet, pour la première étape du mode de freinage dynamique, lorsqu'une poussée est exercée sur la pédale de frein, l'accumulateur 80 reçoit le liquide de frein poussé par le piston primaire 12 dans la chambre primaire 122.

Suivant une autre variante de réalisation non représentée, concernant la réalisation pratique de l'installation, l'accumulateur haute pression 60 avec son électrovanne 70 et le cas échéant l'électrovanne 50 sont intégrés dans le module 30. Il en est également ainsi de la variante de réalisation de la figure 8 dont l'accumulateur haute pression 60 et l'accumulateur de pression 80 ainsi que les électrovannes associées 70, 90 sont réunis dans un ensemble 100 intégré au module 30.

La présente invention concerne de manière générale le domaine des systèmes de freinage dynamique électro-hydrauliques de véhicules automobiles.

### NOMENCLATURE

- 10: Maître-cylindre tandem
- 11: Alésage
111 Gorge périphérique d'alimentation
112 Gorge périphérique d'alimentation
- 12: Piston primaire
121 Orifice d'alimentation
122 Chambre primaire
123 Ressort primaire
- 13: Piston secondaire
131 Orifice d'alimentation
132 Chambre secondaire
133 Ressort secondaire
- 14: Réservoir de liquide de frein
141 Conduite
142 Conduite
- 20: Servofrein
- 21: Tige de poussée
- 22: Piston d'assistance
- 23: Disque de réaction
- 24: Piston intermédiaire
- 25: Piston plongeur
- 26: Tige de commande
- 27: Piston d'actionneur
271 Crémaillère
- 28: Moteur électrique
281 Transmission
282 Pignon
- 30: Module ESP
- 40: Circuit de commande
- 41: Capteur
- 42: Ligne de transmission de signal
- 50: Electrovanne
- 51: Conduite
- 52: Tiroir
- 52A: Position fermée
- 52B: Position active ouverte
- 53: Actionneur
- 54: Ressort de rappel
- 60: Accumulateur haute pression
- 61: Cylindre
- 62: Piston
- 63: Ressort de poussée
- 64: Chambre haute pression
- 65: Conduite de liaison
- 66: Capteur de pression
- 67: Ligne de transmission de signal
- 70: Electrovanne
- 71: Conduite
- 72: Tiroir
- 72A: Position fermée
- 72B: Position ouverte
- 73: Actionneur
- 74: Ressort de rappel
- 80: Accumulateur de pression
- 81: Cylindre
- 82: Piston
- 83: Ressort de poussée
- 84: Chambre
- 90: Electrovanne
- 92: Tiroir
92A Position fermée
92B Position ouverte
- 93: Actionneur
- 94: Ressort de rappel

## Revendications

1. Système de freins dynamique électro-hydraulique comprenant un servofrein à moteur électrique actionnant un maître-cylindre relié aux freins de roue à travers un module ESP, et comportant un accumulateur haute pression relié au maître-cylindre tandem, dans lequel
- l'accumulateur de haute pression (60) relié à la chambre primaire (122) du maître-cylindre (10) et à l'entrée du module ESP (30) par l'intermédiaire d'une électrovanne (70),
- un circuit de commande (40) recevant les signaux de demande de freinage (SFR) du servofrein et du module ESP (30) pour commander l'électrovanne (70) de l'accumulateur haute pression (60) selon le mode de freinage choisi ou imposé,
- le circuit de commande (40) commandant :
* une phase préparatoire au freinage en assurant le remplissage de l'accumulateur haute pression (60) à partir de la chambre primaire (122) en actionnant le servofrein (20) en l'absence d'action sur le frein ou de commande de freinage mécanique par le module ESP (30) et en bloquant la charge de liquide de frein accumulée dans l'accumulateur haute pression (60),
* une phase de freinage dynamique décomposée en deux étapes,
** unepremière étape de freinage dynamique proprement dit avec récupération d'énergie en isolant le maître-cylindre (10) des freins de roue (FR1-4) et en permettant au servofrein (20) de répondre à l'action sur la pédale de frein par une décélération dynamique jusqu'à une vitesse de seuil (VS), et
** une deuxième étape de freinage mécanique à partir de la vitesse de seuil jusqu'à l'arrêt en reliant la chambre primaire (122) uniquement à l'accumulateur haute pression (60) et au module ESP (30) pour fournir à celui-ci le liquide de frein sous pression de l'accumulateur (60) et alimenter les freins de roue (FR1-4) pour un freinage mécanique.

2. Système de freins selon la revendication 1,
**caractérisé par**
une liaison (51) entre la chambre primaire (122) et le réservoir de liquide de frein (14) équipée d'une électrovanne (50) commandée par le module ESP (30).

3. Système de freins selon la revendication 2,
**caractérisé en ce que**
pour la première étape de freinage dynamique dans la phase de freinage dynamique, le circuit de commande (40) actionne l'électrovanne (50) reliant la chambre primaire (122) au réservoir (14) pour l'ouvrir (52B) et laisser dans sa position fermée (72A) l'électrovanne (70) reliant l'accumulateur haute pression (60) à la conduite (124) de sortie de la chambre primaire (122).

4. Système de freins selon la revendication 2,
**caractérisé en ce que**
dans la deuxième étape de freinage mécanique de la phase de freinage dynamique, le circuit de commande (40) commande la fermeture de l'électrovanne (50) (52A) et ouvre l'électrovanne (70) reliant l'accumulateur haute pression (60) à la conduite de sortie (24) de la chambre primaire (122).

5. Système de freins selon la revendication 1,
**caractérisé par**
un accumulateur de pression (80) relié à la chambre primaire (122) par une électrovanne (90) commandée par le module ESP (30) pour mettre en communication cet accumulateur de pression avec la chambre primaire (122) pendant la première étape de freinage dynamique.

6. Système de freins selon les revendications 1 et 5,
**caractérisé en ce que**
l'accumulateur haute pression (60) et l'accumulateur de pression (80) sont des cylindres (61, 81) équipés d'un piston (62, 82) chargé par un ressort (63, 83).

7. Système de freins selon la revendication 5,
**caractérisé en ce que**
l'électrovanne (50) du réservoir (14), l'électrovanne (70) de l'accumulateur haute pression (60) et l'électrovanne (90) de l'accumulateur de pression (80) sont des électrovannes à tiroir (52, 72, 92) à rappel mécanique par ressort (54, 74, 94) en position fermée, en l'absence de courant.

8. Système de freins selon les revendications 4 et 5,
**caractérisé en ce que**
l'accumulateur haute pression (60) et son électrovanne (70) ainsi que l'électrovanne (50) du réservoir (14) ou l'accumulateur haute pression (60), son électrovanne (70) et l'accumulateur de pression (80) et son électrovanne (90) sont intégrés dans le module ESP (30).

9. Procédé de freinage pour un système de freins dynamique électro-hydraulique ayant un servofrein à moteur électrique actionnant un maître-cylindre relié aux freins de roue à travers un module ESP, un circuit de commande (40) recevant les signaux de demande de freinage SFR du servofrein et du module ESP (30) pour commander l'électrovanne (70) de l'accumulateur haute pression (60) selon le mode de freinage choisi ou imposé,
**caractérisé**
**par** les phases de commande suivantes :
* dans une phase préparatoire au freinage, on remplit l'accumulateur haute pression (60) à partir d'une chambre primaire (122) du maître-cylindre en actionnant le servofrein (20) en l'absence d'action sur le frein ou de commande de freinage mécanique par le module ESP (30) et on bloque la charge de liquide de frein accumulée dans l'accumulateur haute pression (60),
* dans une phase de freinage dynamique, on effectue deux étapes :
** on effectue un freinage dynamique proprement dit avec récupération d'énergie en isolant le maître-cylindre (10) des freins de roue (FR1-4) et par le servofrein (20), on répond à l'action sur la pédale de frein jusqu'à la décélération d'une vitesse de seuil (VS),
** à partir de la vitesse de seuil jusqu'à l'arrêt, on relie la chambre primaire (122) du maître-cylindre uniquement à l'accumulateur haute pression (60) et au module ESP (30) pour fournir à celui-ci le liquide de frein sous pression de l'accumulateur (60) et on alimente les freins de roue (FR1-4) pour un freinage mécanique.

## Patentansprüche

1. Elektrohydraulisches dynamisches Bremssystem, das eine Servobremse mit Elektromotor, die einen Hauptbremszylinder betätigt, der mit den Radbremsen über ein ESP-Modul verbunden ist, und einen Hochdruck-Druckspeicher, der mit dem Tandem-Hauptbremszylinder verbunden ist, umfasst, wobei
- der Hochdruck-Druckspeicher (60) mit der Primärkammer (122) des Hauptbremszylinders (10) und mit dem Eingang des ESP-Moduls (30) über ein Elektroventil (70) verbunden ist,
- eine Steuerschaltung (40), die Bremsanforderungssignale (SFR) von der Servobremse und von dem ESP-Modul (30) empfängt, um das Elektroventil (70) des Hochdruck-Druckspeichers (60) gemäß dem gewählten oder vorgeschriebenen Bremsmodus zu steuern,
- wobei die Steuerschaltung (40) Folgendes steuert:
* eine Bremsvorbereitungsphase durch Sicherstellen der Befüllung des Hochdruck-Druckspeichers (60) ausgehend von der Primärkammer (122) durch Betätigen der Servobremse (20) bei Abwesenheit einer Einwirkung auf die Bremse oder eines mechanischen Bremsbefehls durch das ESP-Modul (30) und durch Blockieren der in dem Hochdruck-Druckspeicher (60) akkumulierten Bremsflüssigkeitsladung,
* eine dynamische Bremsphase, die in zwei Schritte unterteilt ist,
** einen ersten eigentlichen dynamischen Bremsschritt mit Energierückgewinnung durch Trennen des Hauptbremszylinders (10) von den Radbremsen (FR1-4) und durch Zulassen, dass die Servobremse (20) auf die Einwirkung auf das Bremspedal durch eine dynamische Verzögerung bis zu einer Schwellengeschwindigkeit (VS) antwortet, und
** einen zweiten mechanischen Bremsschritt von der Schwellengeschwindigkeit bis zum Stillstand durch Verbinden der Primärkammer (122) ausschließlich mit dem Hochdruck-Druckspeicher (60) und mit dem ESP-Modul (30), um an dieses die mit Druck beaufschlagte Bremsflüssigkeit von dem Druckspeicher (60) zu liefern und um die Radbremsen (FR1-4) für ein mechanisches Bremsen zu versorgen.

2. Bremssystem nach Anspruch 1,
**gekennzeichnet durch**
eine Verbindung (51) zwischen der Primärkammer (122) und dem Bremsflüssigkeitsvorratsbehälter (14), die mit einem **durch** das ESP-Modul gesteuerten Elektroventil (50) ausgerüstet ist.

3. Bremssystem nach Anspruch 2,
**dadurch gekennzeichnet, dass**
für den ersten dynamischen Bremsschritt in der dynamischen Bremsphase die Steuerschaltung (40) das Elektroventil (50), das die Primärkammer (122) mit dem Vorratsbehälter (14) verbindet, betätigt, um es zu öffnen (52B) und um das Elektroventil (70), das den Hochdruck-Druckspeicher (60) mit der Ausgangsleitung (124) der Primärkammer (122) verbindet, in seiner geschlossenen Position (72A) zu lassen.

4. Bremssystem nach Anspruch 2,
**dadurch gekennzeichnet, dass**
in dem zweiten Schritt des mechanischen Bremsens der dynamischen Bremsphase die Steuerschaltung (40) das Schließen des Elektroventils (50) (52A) steuert und das Elektroventil (70), das den Hochdruck-Druckspeicher (60) mit der Ausgangsleitung (24) der Primärkammer (122) verbindet, öffnet.

5. Bremssystem nach Anspruch 1,
**gekennzeichnet durch**
einen Druckspeicher (80), der mit der Primärkammer (122) über ein Elektroventil (90) verbunden ist, das durch das ESP-Modul (30) gesteuert wird, um eine Kommunikation zwischen diesem Druckspeicher und der Primärkammer (122) während des ersten Schrittes des dynamischen Bremsens herzustellen.

6. Bremssystem nach den Ansprüchen 1 und 5,
**dadurch gekennzeichnet, dass**
der Hochdruck-Druckspeicher (60) und der Druckspeicher (80) Zylinder (61, 81) sind, die mit einem durch eine Feder (63, 83) belasteten Kolben (62, 82) ausgerüstet sind.

7. Bremssystem nach Anspruch 5,
**dadurch gekennzeichnet, dass**
das Elektroventil (50) des Vorratsbehälters (14), das Elektroventil (70) des Hochdruck-Druckspeichers (60) und das Elektroventil (90) des Druckspeichers (80) Schieber-Elektroventile (52, 72, 92) mit mechanischer Federrückstellung (54, 74, 94) in die geschlossene Position bei Abwesenheit eines Stroms sind.

8. Bremssystem nach den Ansprüchen 4 und 5,
**dadurch gekennzeichnet, dass**
der Hochdruck-Druckspeicher (60) und sein Elektroventil (70) sowie das Elektroventil (50) des Vorratsbehälters (14) oder der Hochdruck-Druckspeicher (60), sein Elektroventil (70) und der Druckspeicher (80) und sein Elektroventil (90) in das ESP-Modul (30) integriert sind.

9. Bremsverfahren für ein elektrohydraulisches dynamisches Bremssystem, das eine Servobremse mit Elektromotor, der einen Hauptbremszylinder betätigt, der mit den Radbremsen über ein ESP-Modul verbunden ist, und eine Steuerschaltung (40), die die Bremsanforderungssignale (SFR) von der Servobremse und von dem ESP-Modul (30) empfängt, um das Elektroventil (70) des Hochdruck-Druckspeichers (60) entsprechend dem gewählten oder vorgeschriebenen Bremsmodus zu steuern, besitzt,
**gekennzeichnet durch** die folgenden Steuerphasen:
* in einer Bremsvorbereitungsphase Befüllen des Hochdruck-Druckspeichers (60) von einer Primärkammer (122) des Hauptbremszylinders **durch** Betätigen der Servobremse (20) bei Abwesenheit einer Einwirkung auf die Bremse oder einer mechanischen Bremssteuerung **durch** das ESP-Modul (30) und Blockieren der in dem Hochdruck-Druckspeicher (60) akkumulierten Bremsflüssigkeitsladung,
* in einer dynamischen Bremsphase die zwei folgenden Schritte:
** Ausführen eines eigentlichen dynamischen Bremsens mit Energierückgewinnung **durch** Trennen des Hauptbremszylinders (10) von den Radbremsen (FR1-4) und Antworten, mittels der Servobremse (20), auf die Einwirkung auf das Bremspedal **durch** eine dynamische Verzögerung bis zu einer Schwellengeschwindigkeit (VS),
** von der Schwellengeschwindigkeit bis zum Stillstand Verbinden der Primärkammer (122) des Hauptbremszylinders ausschließlich mit dem Hochdruck-Druckspeicher (60) und mit dem ESP-Modul (30), um an dieses die mit Druck beaufschlagte Bremsflüssigkeit des Druckspeichers (60) zu liefern, und Versorgen der Radbremsen (FR1-4) für ein mechanisches Bremsen.

## Claims

1. Electrohydraulic dynamic braking system comprising a brake servo unit with electric motor actuating a master cylinder linked to the wheel brakes through an ESP module, and comprising a high-pressure accumulator linked to the tandem master cylinder, in which
- the high-pressure accumulator (60) is linked to the primary chamber (122) of the master cylinder (10) and to the input of the ESP module (30) via a solenoid valve (70),
- a control circuit (40) receives the braking demand signals (SFR) for the brake servo unit and for the ESP module (30) to control the solenoid valve (70) of the high-pressure accumulator (60) according to the chosen or imposed braking mode,
- the control circuit (40) controlling:
* a phase preparatory to the braking by ensuring the filling of the high-pressure accumulator (60) from the primary chamber (122) by actuating the brake servo unit (20) in the absence of action on the brake or of mechanical braking control by the ESP module (30) and by blocking the charge of brake fluid accumulated in the high-pressure accumulator (60),
* a dynamic braking phase broken down into two steps,
** a first actual dynamic braking step with energy harvesting by isolating the master cylinder (10) from wheel brakes (FR1-4) and by allowing the brake servo unit (20) to respond to the action on the brake pedal with a dynamic deceleration to a threshold speed (VS), and
** a second mechanical braking step from the threshold speed to stoppage by linking the primary chamber (122) only to the high-pressure accumulator (60) and to the ESP module (30) to supply the latter with the brake fluid under pressure from the accumulator (60) and feed the wheel brakes (SFR1- 4) for a mechanical braking.

2. Brake system according to Claim 1,
**characterized by**
a link (51) between the primary chamber (122) and the brake fluid tank (14) equipped with a solenoid valve (50) controlled by the ESP module (30).

3. Brake system according to Claim 2,
**characterized in that**
for the first dynamic braking step in the dynamic braking phase, the control circuit (40) actuates the solenoid valve (50) linking the primary chamber (122) to the tank (14) to open it (52B) and leave in its closed position (72A) the solenoid valve (70) linking the high-pressure accumulator (60) to the outlet pipe (124) from the primary chamber (122).

4. Brake system according to Claim 2,
**characterized in that**
in the second mechanical braking step of the dynamic braking phase, the control circuit (40) controls the closing of the solenoid valve (50) (52A) and opens the solenoid valve (70) linking the high-pressure accumulator (60) to the outlet pipe (24) from the primary chamber (122).

5. Brake system according to Claim 1,
**characterized by**
a pressure accumulator (80) linked to the primary chamber (122) by a solenoid valve (90) controlled by the ESP module (30) to connect this pressure accumulator with the primary chamber (122) during the first dynamic braking step.

6. Brake system according to Claims 1 and 5,
**characterized in that**
the high-pressure accumulator (60) and the pressure accumulator (80) are cylinders (61, 81) equipped with a piston (62, 82) loaded by a spring (63, 83).

7. Brake system according to Claim 5,
**characterized in that**
the solenoid valve (50) of the tank (14), the solenoid valve (70) of the high-pressure accumulator (60) and the solenoid valve (90) of the pressure accumulator (80) are slide solenoid valves (52, 72, 92) with mechanical return by spring (54, 74, 94) into the closed position, in the absence of current.

8. Brake system according to Claims 4 and 5,
**characterized in that**
the high-pressure accumulator (60) and its solenoid valve (70) and the solenoid valve (50) of the tank (14) or the high-pressure accumulator (60), its solenoid valve (70) and the pressure accumulator (80) and its solenoid valve (90) are incorporated in the ESP module (30).

9. Braking method for an electrohydraulic dynamic brake system having a brake servo unit with electric motor actuating a master cylinder linked to the wheel brakes through an ESP module, a control circuit (40) receiving the braking demand signals SFR for the brake serve unit and the ESP module (30) to control the solenoid valve (70) of the high-pressure accumulator (60) according to the chosen or imposed braking mode, **characterized by** the following control phases:
* in a phase preparatory to the braking, the high-pressure accumulator (60) is filled from a primary chamber (122) of the master cylinder by actuating the brake servo unit (20) in the absence of action on the brake or of mechanical braking control by the ESP module (30) and the charge of brake fluid accumulated in the high-pressure accumulator (60) is blocked,
* in a dynamic braking phase, two steps are performed:
** an actual dynamic braking is performed with energy harvesting by isolating the master cylinder (10) from the wheel brakes (FR1-4) and by the brake servo unit (20), the action on the brake pedal is responded to with a dynamic deceleration to a threshold speed (VS),
** from the threshold speed to stoppage, the primary chamber (122) of the master cylinder is linked only to the high-pressure accumulator (60) and to the ESP module (30) to supply the latter with brake fluid under pressure from the accumulator (60) and the wheel brakes (FR1-4) are fed for a mechanical braking.
